# EUROPEAN PATENT APPLICATION

(11) **EP 0 723 324 A2**
(43) Date of publication of application: **24.07.1996**
(21) Application number: 95202918.9
(22) Date of filing: 27.10.1995
(51) Int. Cl.: H02G 1/14

(54) **Method and device for embedding a joint between cable ends**

(30) Priority: 27.10.1994 NL 9401786; 05.04.1995 NL 1000070
(71) Applicant: Lovink-Terborg B.V., NL-7061 DT Terborg (NL)
(72) Inventor: van den Hout, Jan Simon, NL-7051 WP Varsseveld (NL); Schellevis, Camille Jean Baptiste, NL-7011 CH Gaanderen (NL)
(74) Representative: Schumann, Bernard Herman Johan

(57) **Abstract**

The invention relates to a method for embedding in an insulating housing a joint between at least two ends of respective electrical cables which are mutually connected for electrical conduction beforehand by means of coupling means, which method comprises the steps of:
providing a mould which comprises at least two relatively movable mould parts and which in closed situation bounds a mould cavity with a shape corresponding with the shape of the housing while leaving free continuous holes for passage of said cables and while leaving free a filling opening, via which the mould cavity can be filled from outside with a moulding material;
positioning in the open mould the coupling means and the said cable ends;
closing the mould;
filling the mould cavity with a curable mass via the filling opening;
causing this mass to cure;
opening the mould; and
removing the mould.

## Description

The invention lies in the field of cable sleeves. Cable sleeves are generally known and usual. They are used to protect the coupling between at least two ends of respective electrical cables against external influences.

The object of the invention is to provide a method enabling very simple and therefore inexpensive manufacture of a cable sleeve.

In respect of the above the invention provides a method for embedding in an insulating housing a joint between at least two ends of respective electrical cables which are mutually connected for electrical conduction beforehand by means of coupling means, which method comprises the steps of:
providing a mould which comprises at least two relatively movable mould parts and which in closed situation bounds a mould cavity with a shape corresponding with the shape of the housing while leaving free continuous holes for passage of said cables and while leaving free a filling opening, via which the mould cavity can be filled from outside with a moulding material;
positioning in the open mould the coupling means and the said cable ends;
closing the mould;
filling the mould cavity with a curable mass via the filling opening;
causing this mass to cure;
opening the mould; and
removing the mould.

Conventional sleeves consist for instance of cast iron or plastic and are often filled with an insulating plastic. The method according to the invention offers the possibility of in situ moulding of an insulating mass of predetermined form round the relevant joint which fulfills the function of both cable sleeve and insulating mass.

Claims 2-14 give a number of options.

The invention also relates to a device for embedding in an insulating housing a joint between at least two ends of respective electrical cables which are mutually connected for electrical conduction beforehand by means of coupling means by applying the method as claimed in any of the foregoing claims, which device comprises:
a mould which comprises at least two relatively movable mould parts, for instance hingedly connected to each other, and which in closed situation bounds a mould cavity with a shape corresponding with the shape of the housing while leaving free continuous holes for passage of said cables and while leaving free a filling opening, via which the mould cavity can be filled from outside with a moulding material.

Claims 15-22 give possible options.

The moulding material can consist for instance of polyurethane or at least contain a relatively large amount thereof. The optionally applied temperature increase can take place to a temperature of for example 60°C.

Use can also be made of a preheating of the moulding material or exclusively a preheating of the mass, wherein after injection into the mould no further heating takes place. Such a preheating can lie in the order of 40°C or higher. In particular exothermic reactions are very suitable for this purpose in the case of two-component mixtures.

Use is preferably made of a moulding material which when curing does not shrink, or does so only negligibly. This can be a so-called low-profile plastics mixture. The quantity of low-profile material can lie for instance in the order of magnitude of 20%. A mixture of polyester and monostyrene can be envisaged, wherein an increase in temperature can take place up to 120-140°C. polyurethane can also be considered for this purpose.

An expansion agent can also be added. Non-expanded polystyrene (NEPS) for instance can be envisaged here.

The housing can advantageously display a certain flexibility and a hardness for instance in the order of 40-50°Sh(D).

A pull relief can be integrated into the housing.

Inspection is possible with an embodiment in which the wall of the mould cavity is transparent.

In order to enable easy release of the housing from the mould use can be made of an anti-adhesion means. This may be for instance a layer of polyethylene, polytetrafluoroethylene, fat or a suitable foil material.

In order to determine the curing time a hardness measurement can take place after a period of time and/or with a certain regularity, for instance on the basis of a spring-loaded pin, the displacement of which is measured. After reaching a certain hardness the curing is considered to be completed.

The relevant measurement can in addition be carried out by optical means.

The mould parts can consist of for instance cast iron. Lighter materials such as suitable plastics are also suitable.

The invention will now be elucidated with reference to the annexed drawings. Herein:
figure 1 shows a perspective view of a device according to the invention in opened situation;
figure 2 shows a perspective transparent view of the resulting coupling between the cables of figure 1 in an insulating housing; and
figure 3 shows a perspective view of another device according to the invention.

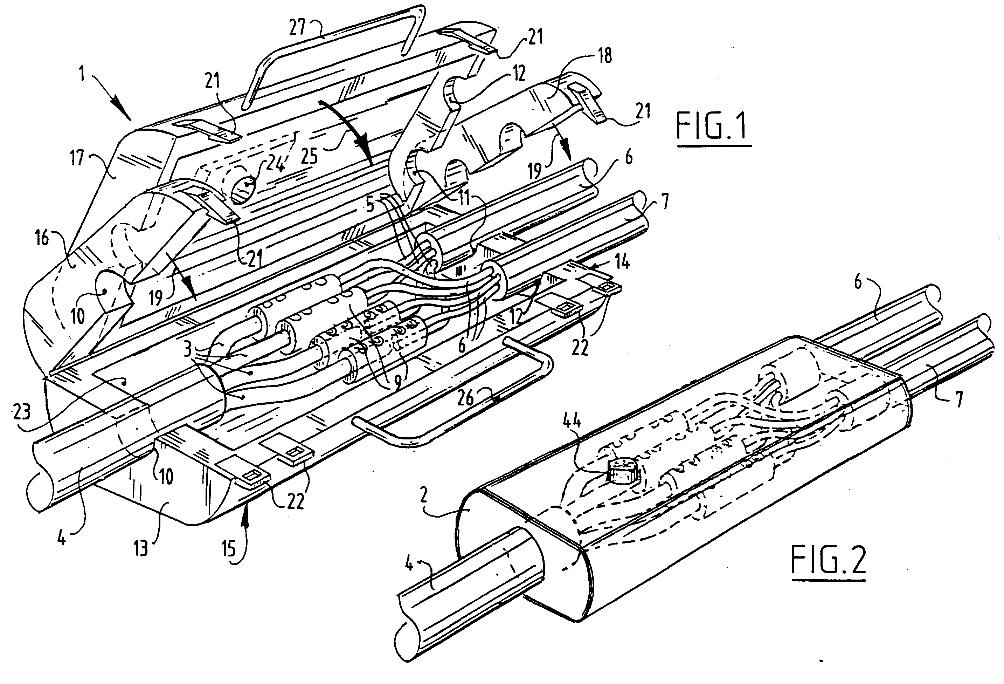

Figure 1 shows a device 1 for embedding in an insulating housing 2 (see figure 2) four joints between the four cores 3 of a first cable 4 and the four cores 5, 6 of respectively a second and a third cable 6, 7.

The respective cores 3, 5, 6 are mutually connected in advance by electrically conducting bushes 9, for instance of copper or aluminium. For this purpose the diverse cores are inserted on either side into an associated bush, whereafter a substantial force is exerted on the bush whereby it is essentially pinched together while simultaneously deforming the cores located therein.

Not drawn is that the cores 3, 5, 6 and/or bushes 9 may be mutually positioned by making use for instance of a positioning piece of foam material.

As shown in figure 1, the cables 4, 5, 6 are supported in correspondingly shaped recesses 10, 11, 12 respectively in the respective end walls 13, 14 of a lower mould part 15 with which an upper mould part 16, 17, 18 co-acts hingedly. The end plates 16, 18 of the mould part 16, 17, 18 have a shape adapted to the shape of the end walls 13, 14 respectively and have corresponding recesses 10, 11, 12 such that by pivoting end plates 16, 18 downward as according to arrows 19 the cables 4, 6, 7 are firmly positioned. Fixation takes place by making use of clamping means 21 which can co-act in releasably snapping manner with eyes 22. The cover 17 is then closed as according to arrow 25 in order to be placed in the same manner in clamping co-action with the mould part 15. Thus formed is a closed package which bounds a mould cavity 23, the shape of which corresponds with the form of the housing 2 for manufacture. Curable material is subsequently introduced into the mould cavity 23 via an aperture 24 in the cover 17.

The introduced material is caused to cure, whereafter the device 1 is opened, resulting in the structure shown in figure 2. This structure comprises the housing 2 into which the cores 3, 5, 6, the bushes 9 and the ends of the sheaths of cables 4, 7, 8 are wholly embedded.

The closed and filled device 1 can be subjected to a temperature increase to cause the introduced material to cure, which material may be liquid, viscous or solid, for instance powder-form or granular.

It will be apparent that a material is chosen as filling material which ensures a good electrical insulation.

For carrying of the device 1 and for moving the mould part 15 and the cover 17 toward each other with force, respective handles 26, 27 are arranged thereon.

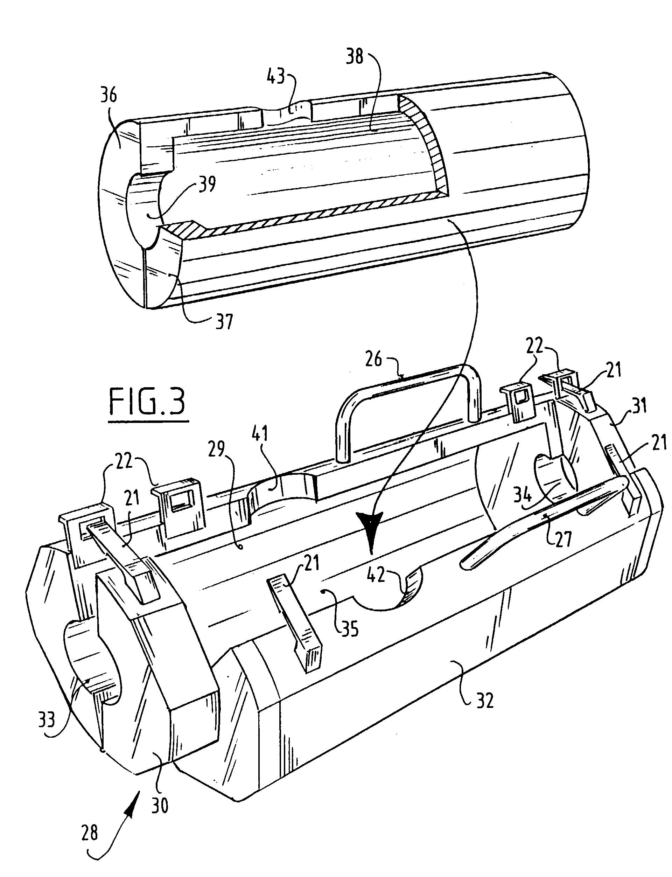

Figure 3 shows a variant. The device 28 shown herein likewise comprises a first mould part 29 and a second mould part which consists of respective end plates 30, 31 and a cover 32 located therebetween and which can co-act sealingly and clampingly with the first mould part 29 while leaving free two apertures 33, 34 for passage of, in this case, only two cables. In the embodiment of the device according to figure 1 the device 28 comprises two mould parts 36, 37 which are to be arranged close-fittingly into the internal cavity 35 of device 28 and which can co-act to bound a mould cavity 38 and are provided with recesses in the end walls which together bound continuous openings 39. Curable mass can be introduced from outside via an opening defined by recesses 41, 42 in respectively the first mould part 29 and the cover 32, which opening connects onto an opening 43 present in the co-acting mould parts 36, 37 and in register with recesses 41, 42.

The embodiment according to figure 3 has the advantage that the mould parts 36, 37 can be exchanged for other mould parts, for example for processing cables of different diameters. The apertures 39 for instance can in this case co-act clampingly and sealingly with the cable sheath of smaller diameter, wherein the apertures 33, 34 then allow passage of the relevant cables with some clearance. The mould cavity 38 can also have a different, desired shape.

The filling opening 24 or the openings 41, 42; 43 can if desired be temporarily closed during curing. This prevents this opening being visible in the end product as a protrusion 44 projecting out of the housing 2.

## Claims

1. Method for embedding in an insulating housing a joint between at least two ends of respective electrical cables which are mutually connected for electrical conduction beforehand by means of coupling means, which method comprises the steps of:
providing a mould which comprises at least two relatively movable mould parts and which in closed situation bounds a mould cavity with a shape corresponding with the shape of the housing while leaving free continuous holes for passage of said cables and while leaving free a filling opening, via which the mould cavity can be filled from outside with a moulding material;
positioning in the open mould the coupling means and the said cable ends;
closing the mould;
filling the mould cavity with a curable mass via the filling opening;
causing this mass to cure;
opening the mould; and
removing the mould.

2. Method as claimed in claim 1, comprising the step of:
causing said mass to cure by increasing the temperature.

3. Method as claimed in claim 1, comprising the step of:
using a two-component mass as curable mass.

4. Method as claimed in claim 3, comprising the step of:
using a solid mass in the form of granules or powder as curable mass.

5. Method as claimed in claim 1, comprising the step of:
using a moulding material containing a dominant proportion of polyurethane.

6. Method as claimed in claims 2 and 5, comprising the step of:
applying an increase in temperature up to (60 ± 20)°C after introducing the moulding material into the mould cavity.

7. Method as claimed in claim 2, comprising the step of:
applying an increase in temperature of at least 40°C prior to introducing the moulding material into the mould cavity.

8. Method as claimed in claim 2, comprising the step of:
using a preferably exothermally reacting two-component mixture as moulding material.

9. Method as claimed in claim 2, comprising the step of:
using a moulding material displaying a negligible curing shrinkage, for instance a low-profile mixture such a mixture of polyester and monostyrene; and
applying an increase in temperature of at least 80°C, for instance 120-140°C.

10. Method as claimed in claim 1, comprising the step of:
using a moulding material containing an expansion agent.

11. Method as claimed in claim 10, comprising the step of:
using non-expanded polystyrene.

12. Method as claimed in claim 1, comprising the step of:
performing the method such that the housing has a certain flexibility and for instance a hardness in the order of 40-50°Sh(D).

13. Method as claimed in claim 1, comprising the step of:
arranging on a cable in advance a pull relief element for enveloping with the moulding material for curing and thus anchoring in the housing.

14. Method as claimed in claim 1, comprising the step of:
measuring the hardness of the moulding material after curing thereof has begun, for instance with mechanical or optical means.

15. Device for embedding in an insulating housing a joint between at least two ends of respective electrical cables which are mutually connected for electrical conduction beforehand by means of coupling means by applying the method as claimed in any of the foregoing claims, which device comprises:
a mould which comprises at least two relatively movable mould parts, for instance hingedly connected to each other, and which in closed situation bounds a mould cavity with a shape corresponding with the shape of the housing while leaving free continuous holes for passage of said cables and while leaving free a filling opening, via which the mould cavity can be filled from outside with a moulding material.

16. Device as claimed in claim 15, wherein the end zones of the mould comprise positioning parts for positioning the cables, which parts are connected for individual relative movement, for instance for mutual pivoting.

17. Device as claimed in claim 15, wherein the mould parts are arranged removably in shells which are connected for relative movement, for instance for mutual pivoting.

18. Device as claimed in claim 15, comprising heating means for heating mass introduced into the mould cavity, which heating means operate for instance electrically, by making use of an external heat source, by making use of ultraviolet radiation, by making use of infrared radiation, with ultrasonic vibrations or other suitable method.

19. Device as claimed in claim 15, comprising separate positioning means for positioning the coupling means in the mould cavity.

20. Device as claimed in claim 19, wherein the positioning means consist of foam material.

21. Device as claimed in claim 15, wherein at least a part of the wall of the mould cavity is transparent.

22. Device as claimed in claim 15, wherein an anti-adhesion layer is applied to the wall of the mould cavity, for instance polyethylene, polytetrafluoroethylene, a fat or an oil.
